# EUROPEAN PATENT APPLICATION

(11) **EP 4 460 077 A1**
(43) Date of publication of application: **06.11.2024**
(21) Application number: 22914006.6
(22) Date of filing: 01.12.2022
(51) Int. Cl.: H04W 28/02, H04W 76/30

(54) **DATA TRANSMISSION METHOD AND APPARATUS, TERMINAL AND NETWORK DEVICE**

(30) Priority: 31.12.2021 CN 202111666097
(71) Applicant: Datang Mobile Communications Equipment Co., Ltd., Beijing 100085 (CN)
(72) Inventor: CHEN, Li, Beijing 100085 (CN)
(74) Representative: Studio Torta S.p.A.
(86) International application number: PCT/CN2022/135907
(87) International publication number: WO 2023/124751

(57) **Abstract**

A data transmission method, an apparatus, a terminal and a network device are provided. The method is applied to a terminal and including: when sending multiple Quality of Service (QoS) flows of a target service to at least one network device, reducing a QoS guarantee level of a target QoS flow, or stopping a transmission of the target QoS flow; where the target QoS flow is one or more of the multiple QoS flows of the target service.

## Description

### CROSS REFERENCE OF RELATED APPLICATION

The present disclosure claims a priority of Chinese patent disclosure No. 202111666097.6 filed on December 31, 2021, which is incorporated herein by reference in its entirety.

### TECHNICAL FIELD

The present disclosure relates to the field of communication technology, and in particular to a data transmission method, an apparatus, a terminal and a network device.

### BACKGROUND

With the development of audio and video technology, holographic services are gradually becoming a reality. Combined with wireless communication technology, holographic services can be put into practical application and promoted. The most important feature of holographic services is the huge amount of data and high latency requirements. It is a great challenge to realize the system capacity and latency reliability requirements in wireless communication systems. For holographic services that require real-time data collection, transmission and presentation, how to reasonably upload the collected service data and ensure service quality and user experience while reducing system overhead is a technical problem that needs to be solved urgently.

### SUMMARY

The present disclosure is to provide a data transmission method, an apparatus, a terminal and a network device to solve the problem that for holographic services that require real-time data collection, transmission and presentation, how to reasonably upload the collected service data, meanwhile reducing system overhead and ensuring service quality and user experience.

In order to solve the above technical problems, the present disclosure provides a data transmission method, applied to a terminal and including:
when sending multiple Quality of Service (QoS) flows of a target service to at least one network device, reducing a QoS guarantee level of a target QoS flow, or stopping a transmission of the target QoS flow; where the target QoS flow is one or more of the multiple QoS flows of the target service.

Optionally, the data transmission method further includes:
storing an untransmitted QoS flow of the target service, and sending the untransmitted QoS flow to the network device actively or according to a scheduling of a network side.

Optionally, the sending the untransmitted QoS flow to the network device actively or according to the scheduling of the network side includes one of:
mapping the untransmitted QoS flow to a new data radio bearer (DRB) to transmit the untransmitted QoS flow via air interface;
transmitting the untransmitted QoS flow through an originally configured DRB via air interface.

Optionally, the sending the untransmitted QoS flow to the network device actively or according to the scheduling of the network side further includes:
marking a priority of the untransmitted QoS flow as lower than a priority of a subsequently arriving QoS flow.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, prior to the reducing the QoS guarantee level of the target QoS flow or stopping the transmission of the target QoS flow, the method further includes:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are the same or different; configuration information about whether a transmission of QoS flow is allowed to be stopped.

Optionally, the reducing the QoS guarantee level of the target QoS flow or stopping the transmission of the target QoS flow includes:
receiving first indication information sent by the at least one network device; where the first indication information is configured to indicate reducing the QoS guarantee level of the target QoS flow, or stopping the transmission of the target QoS flow.

Optionally, subsequent to the receiving the first indication information sent by the at least one network device, the method further includes:
receiving second indication information sent by the at least one network device; where the second indication information is configured to indicate restoring the transmission of the target QoS flow, or restoring the QoS guarantee level of a target QoS flow group.

Optionally, prior to the reducing the QoS guarantee level of the target QoS flow or stopping the transmission of the target QoS flow, the method further includes:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, prior to the reducing the QoS guarantee level of the target QoS flow or stopping the transmission of the target QoS flow, the method further includes:
obtaining viewpoint information of a target receiving end user;
determining the target QoS flow, according to the viewpoint information of the target receiving end user and the uplink transmission configuration information.

Optionally, when sending the multiple QoS flows of the target service to the at least one network device, the method further includes: carrying a group identifier of each QoS flow according to at least one of the following methods:
adding the group identifier of each QoS flow to a data frame;
carrying the group identifier of each QoS flow on an Internet Protocol (IP) packet carrying a data frame;
carrying the group identifier of each QoS flow on a packet of the QoS flow; and
carrying the group identifier of each QoS flow on a layer-2 packet at a radio access network (RAN) side.

A data transmission method is further provided in the embodiment of the present disclosure, applied to a network device and including:
receiving multiple QoS flows of a target service sent by at least one terminal; where a QoS guarantee level of a target QoS flow of the target service is reduced or a transmission of the target QoS flow is stopped, and the target QoS flow is one or more of the multiple QoS flows of the target service.

Optionally, subsequent to the receiving the multiple QoS flows of the target service sent by at least one terminal, the method further includes:
receiving an untransmitted QoS flow of the target service sent by the at least one terminal.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, prior to the receiving the multiple QoS flows of the target service sent by at least one terminal, the method further includes:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are different; configuration information about whether a transmission of QoS flow is allowed to be stopped.

Optionally, subsequent to the sending uplink transmission configuration information of the multiple QoS flows belonging to the target service to the at least one terminal, the method further includes:
obtaining viewpoint information of a target receiving end user;
determining the target QoS flow, according to the viewpoint information of the target receiving end user and the uplink transmission configuration information; and
sending first indication information to the at least one terminal; where the first indication information is configured to indicate reducing the QoS guarantee level of the target QoS flow, or stopping the transmission of the target QoS flow.

Optionally, subsequent to the sending the first indication information to the at least one terminal, the method further includes:
sending second indication information to the at least one terminal; where the second indication information is configured to indicate restoring the transmission of the target QoS flow, or increasing the QoS guarantee level of a target QoS flow group.

Optionally, prior to the receiving the multiple QoS flows of the target service sent by at least one terminal, the method further includes:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, when receiving the multiple QoS flows of the target service sent by at least one terminal, the method further includes: obtaining a group identifier of each QoS flow according to at least one of the following methods:
obtaining the group identifier of each QoS flow carried by a data frame;
obtaining the group identifier of each QoS flow carried by an Internet Protocol (IP) packet carrying a data frame;
obtaining the group identifier of each QoS flow carried by a packet of the QoS flow; and
obtaining the group identifier of each QoS flow carried by a layer-2 packet at a radio access network (RAN) side.

A terminal is further provided in the embodiment of the present disclosure, including: a transceiver, a memory, a processor, and a computer program stored in the memory and executable on the processor; where:
the processor is configured to read the program in the memory to perform:
when sending multiple Quality of Service (QoS) flows of a target service to at least one network device, reducing a QoS guarantee level of a target QoS flow, or stopping a transmission of the target QoS flow; where the target QoS flow is one or more of the multiple QoS flows of the target service.

Optionally, the processor is further configured to read the program in the memory to perform:
storing an untransmitted QoS flow of the target service, and sending the untransmitted QoS flow to the network device actively or according to a scheduling of a network side.

Optionally, processor is further configured to read the program in the memory to perform one of:
mapping the untransmitted QoS flow to a new data radio bearer (DRB) to transmit the untransmitted QoS flow via air interface;
transmitting the untransmitted QoS flow through an originally configured DRB via air interface.

Optionally, the processor is further configured to read the program in the memory to perform:
marking a priority of the untransmitted QoS flow as lower than a priority of a subsequently arriving QoS flow.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, the processor is further configured to read the program in the memory to perform:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are the same or different; configuration information about whether a transmission of QoS flow is allowed to be stopped.

Optionally, the processor is further configured to read the program in the memory to perform:
receiving first indication information sent by the at least one network device; where the first indication information is configured to indicate reducing the QoS guarantee level of the target QoS flow, or stopping the transmission of the target QoS flow.

Optionally, the processor is further configured to read the program in the memory to perform:
receiving second indication information sent by the at least one network device; where the second indication information is configured to indicate restoring the transmission of the target QoS flow, or restoring the QoS guarantee level of a target QoS flow group.

Optionally, the processor is further configured to read the program in the memory to perform:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, the processor is further configured to read the program in the memory to perform:
obtaining viewpoint information of a target receiving end user;
determining the target QoS flow, according to the viewpoint information of the target receiving end user and the uplink transmission configuration information.

Optionally, the processor is further configured to read the program in the memory to perform: carrying a group identifier of each QoS flow according to at least one of the following methods:
adding the group identifier of each QoS flow to a data frame;
carrying the group identifier of each QoS flow on an Internet Protocol (IP) packet carrying a data frame;
carrying the group identifier of each QoS flow on a packet of the QoS flow; and
carrying the group identifier of each QoS flow on a layer-2 packet at a radio access network (RAN) side.

A network device is further provided in the embodiment of the present disclosure, including: a transceiver, a memory, a processor, and a computer program stored in the memory and executable on the processor; where:
the processor is configured to read the program in the memory to perform:
receiving multiple QoS flows of a target service sent by at least one terminal; where a QoS guarantee level of a target QoS flow of the target service is reduced or a transmission of the target QoS flow is stopped, and the target QoS flow is one or more of the multiple QoS flows of the target service.

Optionally, the processor is configured to read the program in the memory to perform:
receiving an untransmitted QoS flow of the target service sent by the at least one terminal.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, the processor is configured to read the program in the memory to perform:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are different; configuration information about whether a transmission of QoS flow is allowed to be stopped.

Optionally, the processor is configured to read the program in the memory to perform:
obtaining viewpoint information of a target receiving end user;
determining the target QoS flow, according to the viewpoint information of the target receiving end user and the uplink transmission configuration information; and
sending first indication information to the at least one terminal; where the first indication information is configured to indicate reducing the QoS guarantee level of the target QoS flow, or stopping the transmission of the target QoS flow.

Optionally, the processor is configured to read the program in the memory to perform:
sending second indication information to the at least one terminal; where the second indication information is configured to indicate restoring the transmission of the target QoS flow, or increasing the QoS guarantee level of a target QoS flow group.

Optionally, the processor is configured to read the program in the memory to perform:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, the processor is configured to read the program in the memory to perform: obtaining a group identifier of each QoS flow according to at least one of the following methods:
obtaining the group identifier of each QoS flow carried by a data frame;
obtaining the group identifier of each QoS flow carried by an Internet Protocol (IP) packet carrying a data frame;
obtaining the group identifier of each QoS flow carried by a packet of the QoS flow; and
obtaining the group identifier of each QoS flow carried by a layer-2 packet at a radio access network (RAN) side.

A data transmission apparatus is further provided in the embodiment of the present disclosure, applied to a terminal and including:
a first processing module, configured to: when sending multiple Quality of Service (QoS) flows of a target service to at least one network device, reduce a QoS guarantee level of a target QoS flow, or stop a transmission of the target QoS flow; where the target QoS flow is one or more of the multiple QoS flows of the target service.

A data transmission apparatus is further provided in the embodiment of the present disclosure, applied to a network device and including:
a fifth receiving module, configured to: receive multiple QoS flows of a target service sent by at least one terminal; where a QoS guarantee level of a target QoS flow of the target service is reduced or a transmission of the target QoS flow is stopped, and the target QoS flow is one or more of the multiple QoS flows of the target service.

A processor-readable storage medium is further provided in the embodiment of the present disclosure, where a computer program is stored in the processor-readable storage medium, the computer program is configured to cause the processor to perform the data transmission method hereinabove.

The beneficial effects of the above technical solution disclosed in the present invention are as follows:
according to the present disclosure, when the terminal sends multiple QoS flows of the target service to at least one network device, the QoS guarantee level of the target QoS flow is reduced, or transmitting of the target QoS flow is stopped; where the target QoS flow is one or more of the multiple QoS flows of the target service. Therefore, it is able to reasonably upload the collected service data, meanwhile reducing system overhead and ensuring service quality and user experience.

### BRIEF DESCRIPTION OF THE DRAWINGS

Fig.1 is a first flow chart of a data transmission method according to an embodiment of the present disclosure;
Fig.2 is a second flowchart of a data transmission method according to an embodiment of the present disclosure;
Fig.3 is a first structural block diagram of a data transmission apparatus according to an embodiment of the present disclosure;
Fig.4 is a second structural block diagram of a data transmission apparatus according to an embodiment of the present disclosure;
Fig.5 is a schematic diagram of a structure of a terminal according to an embodiment of the present disclosure; and
Fig. 6 is a schematic diagram of a structure of a network device according to an embodiment of the present disclosure.

### DETAILED DESCRIPTION

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "multiple" in the embodiments of the present disclosure refers to two or more than two, and other quantifiers are similar thereto.

The terminal device in the embodiments of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network device in the embodiments of the present disclosure may be a base station, which may include multiple cells providing services for terminals. Depending on the specific application scenario, the base station may also be called an access point, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (Global System for Mobile communications, GSM) or Code Division Multiple Access (Code Division Multiple Access, CDMA), or a network device (NodeB) in Wide-band Code Division Multiple Access (WCDMA), or an evolutionary network device (evolutional Node B, eNB or e-NodeB) in the long-term evolution (long term evolution, LTE) system, a 5G base station (gNB) in the 5G network architecture (next generation system), or a home evolved Node B (Home evolved Node B, HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately. 5G refers to the fifth generation mobile communication technology (5th Generation Mobile Communication Technology).

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO (2D-MIMO), three-dimensional MIMO (3D-MIMO), full-dimensional MIMO (Full-MIMO), and multi-user MIMO (MU-MIMO). Dimension MIMO, FD-MIMO) or massive MIMO (massive-MIMO), it can also be diversity transmission, precoding transmission, or beamforming transmission, etc.

The following first introduces the contents involved in the solution provided by the embodiment of the present disclosure.

### 1. Holographic Business

In holographic services, a picture is captured from different viewpoints, levels and angles. From the viewer's perspective, different domains of the captured image are presented to the viewer according to the viewer's position relative to the picture. For the same target or scene, the presentation pictures seen from different viewpoints are different, and these different presentation pictures are composed of different image domains. The transmission and presentation of streaming holographic audio and video on the network is an important issue after 5G and 6G. 6G refers to the sixth generation mobile communication technology (6th Generation Mobile Communication Technology).

To realize holographic services, at least three links are involved: data collection, data transmission on the network, and holographic service presentation after the data reaches the destination. After capturing the holographic service data, the data collection end decomposes it into multiple holographic service streams, and sends these holographic service streams to the receiving end through the network. After receiving the holographic service stream, the receiving end can present it and restore the holographic service audio and video. If it is point-to-point transmission, the holographic service data collection end sends the holographic service stream directly to the receiving end through a direct link; if it is remote transmission (this is a more common method), the holographic service data collection end uploads the holographic service stream to the network side, and then sends it to the holographic service receiving end through the network side. We call the process of the data collection end sending the holographic service stream in these two ways holographic service data upload.

The holographic service flow has the following basic characteristics:
1. The holographic service contains independent depth layers and color layers (as shown in the figure below). The depth layer and color layer can be split into different streams respectively. The superposition of different streams presents different clarity effects.
2. A complete holographic service presentation is completed by multiple service streams from different angles. In other words, multiple streams from a specific angle can present a partial presentation effect of a holographic service, and streams from different angles ultimately form a complete presentation of the holographic service.

Take a single stream 4K (4096×2160) as the unit pixel, 5×5 holographic image data as an example: using a 60fps refresh rate and a 100:1 compression ratio, to support the multidimensional holographic stereoscopic presentation effect, it is necessary to support at least 360 concurrent streams, and the peak transmission bandwidth will reach the Tbps level. In addition, to achieve an end-to-end immersive experience, the end-to-end latency requirement for holographic services is 5ms.

### 2. 3rd Generation Partnership Project (3GPP) System Quality of Service (QoS) Architecture

The User Plane Function (UPF) entity of the core network performs QoS management on data packets from the application layer and sends QoS rules to the access network node (AN) (such as the base station) and the terminal. In the downlink direction, the core network maps the application layer data to the QoS flow (a QoS flow can be regarded as a pipeline for transmitting a type of application layer data, and each QoS flow is identified by a QoS flow ID (QFI)) according to the QoS rules, and sends the QoS flow to the access network node. The access network node maps the QoS flow, specifically mapping the QoS flow to the data radio bearer (DRB) and transmits it on the access network resources. In the uplink direction, the terminal maps the application layer data to the QoS flow according to the QoS rules, and then maps the QoS flow to the DRB according to the configuration of the access network node, and transmits the data on the air interface according to the resource allocation of the access network node.

In simple terms, in the 3GPP wireless access network, the core network performs QoS management on the application layer data, and the core network sends the QoS rules and parameters (such as priority, latency of QoS flow, reliability, guaranteed bit rate, etc.) to the access network (including base stations and terminals). The access network transmits service data according to the QoS rules and QoS parameters indicated by the core network, and it is considered that the service layer data requirements are met if the QoS requirements sent by the core network are met. That is, the QoS parameter requirements of the service layer for the QoS flow are mandatory for the access network.

Holographic services have a different model from traditional services. They introduce multi-flow and co-flow, and have ultra-high rate requirements. Traditional services use QoS to ensure user experience. For holographic and extended reality (XR) services, it is necessary to consider the balance between resource usage and user experience. In other words, for holographic services, the purpose is not to guarantee the QOS of one or several flows required by the application layer, but to ensure user service experience when bandwidth requirements are high and resources are limited, or to increase service capacity (that is, how many holographic services can be served simultaneously) when resources are limited.

Based on the above, the embodiments of the present disclosure provide a data transmission method, apparatus, terminal and network device to solve the problem of how to reasonably upload the collected service data for holographic services that require real-time data collection, transmission and presentation, while reducing system overhead and ensuring service quality and user experience.

The method and the device are based on the same application concept. Since the method and the device solve the problem in a similar principle, the implementation of the device and the method can refer to each other, and the repeated parts will not be repeated.

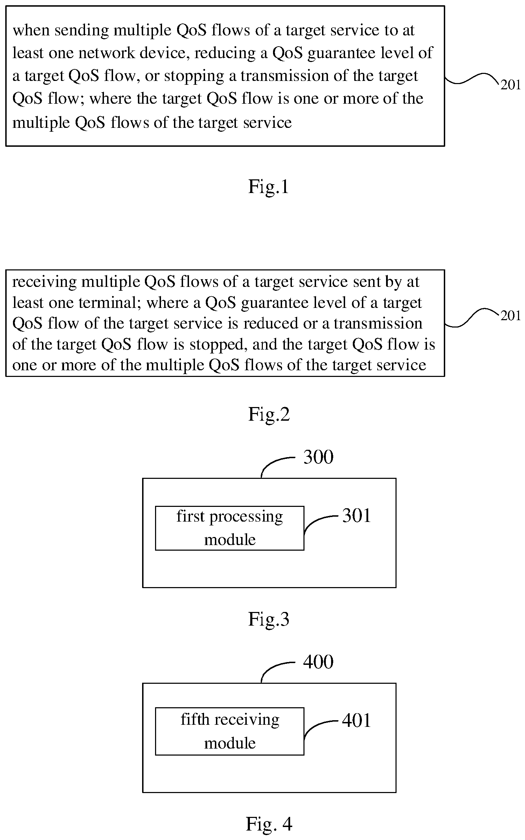

Referring to Fig. 1, an embodiment of the present disclosure provides a data transmission method, which is applied to a terminal and includes the following steps:

Step 101: when sending multiple Quality of Service (QoS) flows of a target service to at least one network device, reducing a QoS guarantee level of a target QoS flow, or stopping a transmission of the target QoS flow; where the target QoS flow is one or more of the multiple QoS flows of the target service.

In this step, the terminal is the data collection end of the target service. The terminal transmits multiple QoS flows of the target service to the network device according to the QoS rules and QoS parameters indicated by the core network. When transmitting multiple QoS flows of the target service to the network device, the QoS guarantee level of some QoS flows is reduced, or the transmission of some QoS flows is stopped.

According to the embodiments, it is possible to upload a QoS flow that can guarantee the user experience of the receiving end according to the highest QoS requirements of the target service, thereby saving air interface overhead and improving the capacity of the holographic service system. In this way, it is possible to guarantee the user service experience when the bandwidth requirement is high and the resources are limited, or to increase the service capacity when the resources are fixed. Therefore, this embodiment can guarantee the service quality and user experience while reducing the system overhead.

It should be noted that the data upload model may include: a terminal sends multiple QoS flows belonging to a target service to a network device; or, multiple terminals send different QoS flows belonging to a target service to a network device; or, multiple terminals send different QoS flows belonging to a target service to one or more network devices. When the upload model involves multiple terminals, the terminal in the present disclosure is one of them.

It should be noted that the present disclosure is described in accordance with the model in which IP flows are mapped to QoS flows and services are transmitted as QoS flows over the air interface. If the service flow is mapped to other flow models over the air interface, as long as the flow type has different flow characteristics that reflect service flows at different layers or angles, the "QoS flow" in the present disclosure can be directly replaced with the corresponding flow name.

Optionally, the data transmission method further includes:
storing an untransmitted QoS flow of the target service, and sending the untransmitted QoS flow to the network device actively or according to a scheduling of a network side.

Optionally, the sending the untransmitted QoS flow to the network device actively or according to the scheduling of the network side includes one of:
mapping the untransmitted QoS flow to a new data radio bearer (DRB) to transmit the untransmitted QoS flow via air interface;
transmitting the untransmitted QoS flow through an originally configured DRB via air interface.

Furthermore, in an optional embodiment, when mapping the untransmitted QoS flow to a new data radio bearer (DRB) to transmit the untransmitted QoS flow via air interface or transmitting the untransmitted QoS flow through an originally configured DRB via air interface, the method further includes: marking a priority of the untransmitted QoS flow as lower than a priority of a subsequently arriving QoS flow.

In this embodiment, after the terminal reduces the QoS guarantee level for the target QoS flow or data radio bearer DRB or stops transmission for a certain period of time, the QoS flow data that has not been uploaded can be stored in the terminal or a memory associated with the terminal, and no longer transmitted over the air interface; or, the QoS flow data that has not been uploaded is mapped to another DRB and transmitted over air interface transmission, where the DRB has a high-latency and high-reliability configuration (such as mapping to a non guarantee bitrate (NGBR) service, with a low air interface configuration priority and a low Prioritised Bit Rate (PBR), but with high reliability requirements); or, it remains in the originally configured DRB, but is specially marked to determine that this part of the data packets has a lower priority than the subsequently arriving data packets, and can only be transmitted over the air interface after the high-priority data are transmitted.

In one embodiment, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

In this embodiment, when the target QoS flow includes at least one QoS flow group, the QoS flows in each group need a QoS guarantee at the same time. The grouping basis may include: grouping QoS flows that can be presented in one direction as a group (such as dividing 360 degrees into N directions); grouping QoS flows according to the different solutions that can be presented; grouping a group of QoS flows that affect each other as a group, such as a group of audio and video flows in a specific direction triggered by a specific action flow. By grouping multiple QoS flows belonging to the target service, while ensuring the presentation effect for a specific user service and reducing the access network overhead, the target QoS flow can be easily determined and the processing efficiency can be improved.

It should be noted that the terminal uploads some QoS flow data with lower QoS guarantee, or stops uploading some QoS data flows, and is configured and activated in one of the following two ways:

### Method 1: Controlled by network device

### 1. Configuration

In one embodiment, before lowering the QoS guarantee level of the target QoS flow or stopping the transmission of the target QoS flow, the method further includes:

receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;

the uplink transmission configuration information includes at least one of: multiple sets of QoS transmission parameters corresponding to the QoS flows, where priorities of different sets of QoS transmission parameters are the same or different; configuration information about whether a transmission of QoS flow is allowed to be stopped.

It should be noted that each set of QoS transmission parameters is configured for a QoS flow or a QoS flow group or a DRB, and each set of QoS transmission parameters includes priority, guaranteed bit rate PBR, etc. Among multiple sets of QoS transmission parameters, one set of QoS parameters is the highest priority parameter required by the target service, and the other QoS parameters have a lower transmission priority (cannot meet the transmission requirements of the service layer). The configuration information of whether transmission of QoS flow is allowed to be stopped is configured for the QoS flow or the QoS flow group or the DRB.

### 2. Activation and deactivation

In one embodiment, the reducing the QoS guarantee level of the target QoS flow or stopping the transmission of the target QoS flow includes:

receiving first indication information sent by the at least one network device; where the first indication information is configured to indicate reducing the QoS guarantee level of the target QoS flow, or stopping the transmission of the target QoS flow.

Furthermore, subsequent to the receiving the first indication information sent by the at least one network device, the method further includes:
receiving second indication information sent by the at least one network device; where the second indication information is configured to indicate restoring the transmission of the target QoS flow, or restoring the QoS guarantee level of a target QoS flow group.

In this embodiment, the network device (such as a base station) sends a QoS level modulation indication (first indication information) to specify the QoS level currently used by the terminal for the target QoS flow or DRB, or the network device sends a stop indication to instruct the terminal to stop the transmission of the target QoS flow or DRB. Further, after instructing the terminal to reduce the QoS level transmission or stop the transmission of the target QoS flow or DRB, the network device may send a second indication information again to instruct the terminal to increase the QoS level or resume the transmission of the target QoS flow or DRB.

### Method 2: Controlled by terminal

### 1. Configuration

In one embodiment, prior to the reducing the QoS guarantee level of the target QoS flow or stopping the transmission of the target QoS flow, the method further includes:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

The uplink transmission configuration information further includes:
multiple sets of QoS transmission parameters corresponding to the QoS flows, where priorities of different sets of QoS transmission parameters are the same or different.

In this embodiment, the network device configures for the terminal whether to allow the QoS flow or DRB to automatically reduce the QoS level or stop transmission. Optionally, the network device can also configure multiple sets of QoS transmission parameters for the QoS flow or DRB, and the priorities of different sets of QoS transmission parameters are the same or different.

### 2. Activation and deactivation

In one embodiment, prior to the reducing the QoS guarantee level of the target QoS flow or stopping the transmission of the target QoS flow, the method further includes:
obtaining viewpoint information of a target receiving end user;
determining the target QoS flow, according to the viewpoint information of the target receiving end user and the uplink transmission configuration information.

The target receiving end user refers to the user who finally receives the target service. The terminal corresponding user in the present disclosure is the service collection and sending user, and has a peer relationship with the target receiving end user.

In this embodiment, the terminal determines the information of the QoS flow or DRB that the target receiving end needs to receive. Specifically, the viewpoint information of the user of the target receiving end is obtained through the position sensor of the target receiving end. The target receiving end sends the viewpoint information to the terminal of the data acquisition end via wired or wireless means. The terminal determines that it can reduce the QoS level or stop transmitting the target QoS flow or DRB on its own, and triggers the reduction of the QoS guarantee level of the target QoS flow, or stops transmitting the target QoS flow.

In one embodiment, when sending the multiple QoS flows of the target service to the at least one network device, the method further includes:
carrying a group identifier of each QoS flow according to at least one of the following methods:
Method 1: adding the group identifier of each QoS flow to a data frame.
   the group identifier of each QoS flow is added to the data frame through the terminal application layer.
Method 2: carrying the group identifier of each QoS flow on an Internet Protocol (IP) packet carrying a data frame.
   For example, the terminal transport layer adds the group identifier of each QoS flow to the IP packet carrying the data frame.

### Mode 3: carrying the group identifier of each QoS flow on a packet of the QoS flow.

For example, the group identifier of each QoS flow is added to the QoS flow grouping data packet through the Service Data Adaptation Protocol (SDAP) layer of the terminal.

### Mode 4: carrying the group identifier of each QoS flow on a layer-2 packet at a radio access network (RAN) side.

For example, the terminal adds the group identifier of each QoS flow to a layer-2 data packet on the RAN side, such as a Packet Data Convergence Protocol (PDCP) or a Protocol Data Unit (PDU).

The present disclosure is introduced below by taking a base station as an example in combination with the following two examples.

Example 1: The base station configures and triggers the terminal to reduce the QoS level of transmission or stop transmission for the target QoS flow or DRB.

### 1. Base station side

Step 1: using a dedicated Radio Resource Control (RRC) message to adjust the uplink transmission parameters for the terminal, including:
(1) configuring multiple sets of QoS transmission parameters for a specific QoS flow (QoS flow group) or a specific DRB, including: priority, guaranteed bit rate, etc., where one set of QoS parameters is the highest priority parameter required by the service, and the other QoS parameters have a lower transmission priority (cannot meet the transmission requirements of the service layer); or,
(2) configuring whether to stop transmission for a specific QoS flow (QoS flow group) or a specific DRB.

Step 2: If the terminal subsequently transmits data at a lower QoS level or stops transmitting data for a period of time, the processing rules for the untransmitted data may include one of the following processing methods:
(1) instructing to clear the unuploaded data from the terminal layer-2 cache, that is, no more air interface transmission. The data can be stored in the terminal or in a memory associated with the terminal (implementation behavior, not configured by the base station). This rule can also be specified by the protocol, and the base station does not configure it.
(2) mapping the unuploaded data to another QoS flow or DRB.
(3) remaining in the originally configured DRB, but these packets are specially marked to ensure that they have a lower priority than the packets that arrive later. They can be transmitted over the air interface only after the high-priority packets are transmitted.

Step 3: the base station receives instructions from the core network or obtains the user's location (viewpoint) information from other wired or wireless transmission paths; based on the user's location (viewpoint) information, determines the QoS flow (QoS flow group) or DRB for which the QoS level can be reduced or transmission can be stopped; or, after determining the user's location (viewpoint) information, the core network determines the QoS flow (QoS flow group) for which the QoS level can be reduced, and sends the QoS flow (QoS flow group) information to the base station.

Step 4: the base station sending an instruction to activate special transmission to the terminal, including:
(1) sending a QoS level modulation indication to the terminal, to specify the transmission parameter set (such as PDCP configuration, RLC configuration, logical channel parameter configuration, etc.) currently used by the terminal for a specific QoS flow (QoS flow group) or DRB; or,
(2) sending a stop indication to the terminal, to instruct the terminal to stop the transmission of a specific QoS flow (QoS flow group) or DRB.

Step 4: the base station sends signaling to update the transmission parameters of the terminal uploading data according to the receiving end user location (viewpoint) information or the core network instruction; or instructs the terminal to resume the transmission of a specific QoS flow (QoS flow group) or DRB.

### 2. Terminal side

Step 1: the receiving base station may adjust the uplink transmission configuration of the transmission parameters for a specific QoS flow (QoS flow group) or DRB.

Step 2: receiving an indication from the base station to activate special transmission, and performing uplink transmission for the specified QoS flow (QoS flow group) or DRB according to the transmission parameters with a reduced QoS level based on the indication; or, based on the indication from the base station, stop the uplink transmission of the special QoS flow (QoS flow group) or DRB.

Step 3: for the data packets that are not transmitted uplink due to the reduction of QoS level or the suspension of transmission, one of the following processing methods is performed according to the base station instruction or protocol provisions:
(1) clearing the layer-2 memory (buffer) and stopping air interface transmission.
(2) mapped to other QoS flows or DRBs configured by the base station for transmission.
(3) still storing this part of data in the layer-2 buffer, marking this part of data, and transmitting this part of data with the lowest priority in the same QoS flow or DRB.

Example 2: the terminal automatically reduces the QoS level of a specific QoS flow (QoS flow group) or DRB, or stops transmission thereof

### 1. Base station side

Step 1: using a dedicated RRC message, adjusting the uplink transmission configuration of the transmission parameters for the terminal, including:
(1) configuring multiple sets of QoS transmission parameters for a specific QoS flow (QoS flow group) or a specific DRB, including priority, guaranteed bit rate, etc., where one set of QoS parameters is the highest priority parameter required by the service, and the other QoS parameters have a lower transmission priority (cannot meet the transmission requirements of the service layer); or,
(2) configuring whether to stop transmission for a specific QoS flow (QoS flow group) or a specific DRB.

Step 2: If the terminal subsequently transmits data at a lower QoS level or stops transmitting data for a period of time, the processing rules for the untransmitted data may include one of the following processing methods:
(1) instructing to clear the unuploaded data from the terminal layer-2 cache, that is, no more air interface transmission. The data can be stored in the terminal or in a memory associated with the terminal (implementation behavior, not configured by the base station). This rule can also be specified by the protocol, and the base station does not configure it.
(2) mapping the data that is not uploaded to another QoS flow or DRB.
(3) remaining the originally configured DRB, but these packets are specially marked to ensure that they have a lower priority than the packets that arrive later. They can be transmitted over the air interface only after the high-priority packets are transmitted.

### 2. Terminal side

Step 1: receiving an uplink transmission configuration from a base station that can adjust transmission parameters for a specific QoS flow (QoS flow group) or DRB.

Step 2: receiving the user's location information (such as user viewpoint) indicated by the core network through a non-access stratum (NAS) message or obtained from other wired or wireless transmission paths; determine the QoS flow (QoS flow group) or DRB for which the QoS level can be reduced or the transmission can be stopped based on the user's location information; or, after determining the location information of the receiving user, the core network determines the QoS flow (QoS flow group) for which the QoS level can be reduced, and sends the QoS flow (QoS flow group) to the terminal through a NAS message.

Step 3: performing uplink transmission on the determined QoS flow (QoS flow group) or DRB according to the transmission parameters with reduced QoS level, or stop the uplink transmission of the QoS flow (QoS flow group) or DRB.

Step 4: for the data packets that are not transmitted uplink due to the reduction of QoS level or the suspension of transmission, according to the base station instruction or protocol provisions, one of the following is performed:
(1) clearing the layer-2 buffer and stop air interface transmission.
(2) mapped to other QoS flows or DRBs configured in the base station for transmission.
(3) storing this part of data in the layer-2 buffer, marking this part of data, and transmitting this part of data with the lowest priority in the same QoS flow or DRB.

It should be noted that the solution proposed in the present disclosure for holographic services is also applicable to services and scenarios such as XR that have multiple independent streams but have synchronization requirements, and require multiple streams to be presented jointly. When some streams cannot be transmitted according to the highest requirements, it does not affect the user experience. In the above embodiment, during the service communication process, the terminal at the service data acquisition end only uploads the QoS stream that can guarantee the user experience of the receiving end according to the highest QoS requirements of the holographic service based on the service presentation requirements of the service receiving end (such as the service presentation end only needs to perform the clearest service presentation at some angles, that is, the QoS stream corresponding to this angle needs to ensure the most complete data collection and transmission from the source end), thereby saving air interface overhead and improving the capacity of the holographic service system. The subsequent data that has not been uploaded can be transmitted during idle time based on network-side scheduling, which ultimately guarantees the collection and storage of holographic service data and improves the overall system capacity.

Referring to Fig. 2, an embodiment of the present disclosure provides a data transmission method, which is applied to a network device and includes the following steps:

Step 201: receiving multiple QoS flows of a target service sent by at least one terminal; where a QoS guarantee level of a target QoS flow of the target service is reduced or a transmission of the target QoS flow is stopped, and the target QoS flow is one or more of the multiple QoS flows of the target service.

In this step, the network device is used to send the data of the target service collected and uploaded by the terminal to the target receiving end for presentation. The terminal is the data collection end of the target service. The terminal transmits multiple QoS flows of the target service to the network device according to the target QoS rules and QoS parameters indicated by the core network; among the multiple QoS flows of the target service uploaded by the terminal side, the QoS guarantee level of some QoS flows is reduced, or the transmission of some QoS flows is stopped.

In this way, this embodiment can upload a QoS flow that can guarantee the user experience of the receiving end according to the highest QoS requirements of the target service, thereby saving air interface overhead and improving the capacity of the holographic service system. In this way, it is possible to guarantee the user service experience when the bandwidth requirement is high and the resources are limited, or to increase the service capacity when the resources are fixed. Therefore, this embodiment can guarantee the service quality and user experience while reducing the system overhead.

It should be noted that the data upload model may include: a terminal sends multiple QoS flows belonging to a target service to a network device; or multiple terminals send different QoS flows belonging to a target service to a network device; or multiple terminals send different QoS flows belonging to a target service to one or more network devices. When the upload model involves multiple network devices, the network device in the present disclosure is one of them.

In one embodiment, subsequent to the receiving the multiple QoS flows of the target service sent by at least one terminal, the method further includes:
receiving an untransmitted QoS flow of the target service sent by the at least one terminal.

In this embodiment, the QoS flow that is not transmitted by the terminal side can be scheduled by the network device or the terminal side can actively send it to the network device. The way in which the terminal side sends the untransmitted QoS flow to the network device includes one of the following:
mapping the untransmitted QoS flow to a new data radio bearer (DRB) to transmit the untransmitted QoS flow via air interface;
transmitting the untransmitted QoS flow through an originally configured DRB via air interface.

Optionally, when the terminal side sends the untransmitted QoS flow to the network device, the method further includes: marking a priority of the untransmitted QoS flow as lower than a priority of a subsequently arriving QoS flow.

In one embodiment, the target QoS flow includes at least one QoS flow and/or at least one QoS flow group, and each of the QoS flow group includes at least one of the multiple QoS flows of the target service.

Specifically, the QoS flows are grouped according to at least one of the following methods:
grouping the QoS flows presenting a same orientation into a group;
grouping the QoS flows in terms of different presentation resolutions; and
grouping the QoS flows affecting each other into a group.

In this embodiment, when the target QoS flow includes at least one QoS flow group, the QoS flows in each group need to be QoS guaranteed at the same time. The grouping basis may include: grouping QoS flows that can be presented in one direction as a group (such as dividing 360 degrees into N directions); grouping QoS flows according to the different clarity that can be presented; grouping a group of QoS flows that affect each other as a group, such as a group of audio and video flows in a specific direction triggered by a specific action flow. By grouping multiple QoS flows belonging to the target service, while ensuring the presentation effect for a specific user service and reducing the access network overhead, the target QoS flow can be easily determined and the processing efficiency can be improved.

It should be noted that the terminal uploads some QoS flow data with lower QoS guarantee, or stops uploading some QoS data flows, and is configured and activated in one of the following two ways:

### Method 1: Controlled by network device

### 1. Configuration

In one embodiment, prior to the receiving the multiple QoS flows of the target service sent by at least one terminal, the method further includes:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are different; configuration information about whether a transmission of QoS flow is allowed to be stopped.

It should be noted that each set of QoS transmission parameters is configured for a QoS flow or a QoS flow group or a DRB, and each set of QoS transmission parameters includes priority, guaranteed bit rate PBR, etc. Among multiple sets of QoS transmission parameters, one set of QoS parameters is the highest priority parameter required by the target service, and the other QoS parameters have a lower transmission priority (cannot meet the transmission requirements of the service layer). The configuration information of whether transmission of QoS flow is allowed to be stopped is configured for the QoS flow or the QoS flow group or the DRB.

### 2. Activation and deactivation

In one embodiment, subsequent to the sending uplink transmission configuration information of the multiple QoS flows belonging to the target service to the at least one terminal, the method further includes:
obtaining viewpoint information of a target receiving end user;
determining the target QoS flow, according to the viewpoint information of the target receiving end user and the uplink transmission configuration information; and
sending first indication information to the at least one terminal; where the first indication information is configured to indicate reducing the QoS guarantee level of the target QoS flow, or stopping the transmission of the target QoS flow.

Furthermore, in one embodiment, subsequent to the sending the first indication information to the at least one terminal, the method further includes:
sending second indication information to the at least one terminal; where the second indication information is configured to indicate restoring the transmission of the target QoS flow, or increasing the QoS guarantee level of a target QoS flow group.

In this embodiment, the network device (such as a base station) sends a QoS level modulation indication (first indication information) to specify the QoS level currently used by the terminal for the target QoS flow or DRB, or the network device sends a stop indication to instruct the terminal to stop the transmission of the target QoS flow or DRB. Further, after instructing the terminal to reduce the QoS level transmission or stop the transmission of the target QoS flow or DRB, the network device may send a second indication information again to instruct the terminal to increase the QoS level or resume the transmission of the target QoS flow or DRB.

### Method 2: Terminal Control

### 1. Configuration

In one embodiment, prior to the receiving the multiple QoS flows of the target service sent by at least one terminal, the method further includes:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

In an optional embodiment, the uplink transmission configuration information further includes:
multiple sets of QoS transmission parameters corresponding to the QoS flows, where priorities of different sets of QoS transmission parameters are the same or different.

In this embodiment, the network device configures for the terminal whether to allow the QoS flow or DRB to automatically reduce the QoS level or stop transmission. Optionally, the network device can also configure multiple sets of QoS transmission parameters for the QoS flow or DRB, and the priorities of different sets of QoS transmission parameters are the same or different.

### 2. Activation and deactivation

It should be noted that activation and deactivation are implemented by terminal control. Please refer to the solution on the terminal side, which will not be repeated here.

In one embodiment, when receiving the multiple QoS flows of the target service sent by at least one terminal, the method further includes: obtaining a group identifier of each QoS flow according to at least one of the following methods:
obtaining the group identifier of each QoS flow carried by a data frame;
obtaining the group identifier of each QoS flow carried by an Internet Protocol (IP) packet carrying a data frame;
obtaining the group identifier of each QoS flow carried by a packet of the QoS flow; and
obtaining the group identifier of each QoS flow carried by a layer-2 packet at a radio access network (RAN) side.

Referring to Fig. 3, an embodiment of the present disclosure provides a data transmission apparatus 300, which is applied to a terminal and includes:
a first processing module 301, configured to: when sending multiple Quality of Service (QoS) flows of a target service to at least one network device, reduce a QoS guarantee level of a target QoS flow, or stop a transmission of the target QoS flow; where the target QoS flow is one or more of the multiple QoS flows of the target service.

Optionally, the data transmission method further includes:
a second processing module, configured to: store an untransmitted QoS flow of the target service, and sending the untransmitted QoS flow to the network device actively or according to a scheduling of a network side.

Optionally, the second processing module includes one of:
a first processing sub-module, configured to map the untransmitted QoS flow to a new data radio bearer (DRB) to transmit the untransmitted QoS flow via air interface;
a second processing sub-module, configured to transmit the untransmitted QoS flow through an originally configured DRB via air interface.

Optionally, the second processing module further includes:
a third processing sub-module, configured to mark a priority of the untransmitted QoS flow as lower than a priority of a subsequently arriving QoS flow.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, the apparatus 300 further includes:
a first receiving module, configured to receive uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are the same or different; configuration information about whether a transmission of QoS flow is allowed to be stopped.

Optionally, the apparatus 300 further includes:
a second receiving module, configured to receive first indication information sent by the at least one network device; where the first indication information is configured to indicate reducing the QoS guarantee level of the target QoS flow, or stopping the transmission of the target QoS flow.

Optionally, the apparatus 300 further includes:
a third receiving module, configured to receive second indication information sent by the at least one network device; where the second indication information is configured to indicate restoring the transmission of the target QoS flow, or restoring the QoS guarantee level of a target QoS flow group.

Optionally, the apparatus 300 further includes:
a fourth receiving module, configured to receive uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, the apparatus 300 further includes:
a first obtaining module, configured to obtain viewpoint information of a target receiving end user;
a first determining module, configured to determine the target QoS flow, according to the viewpoint information of the target receiving end user and the uplink transmission configuration information.

Optionally, a third processing module, configured to: carry a group identifier of each QoS flow according to at least one of the following methods:
adding the group identifier of each QoS flow to a data frame;
carrying the group identifier of each QoS flow on an Internet Protocol (IP) packet carrying a data frame;
carrying the group identifier of each QoS flow on a packet of the QoS flow; and
carrying the group identifier of each QoS flow on a layer-2 packet at a radio access network (RAN) side.

It should be noted here that the above-mentioned device provided by the embodiment of the present disclosure can implement all the method steps implemented by the method embodiment on the above-mentioned terminal side, and can achieve the same technical effect. The parts and beneficial effects of this embodiment that are the same as the method embodiment will not be described in detail here.

Referring to Fig. 4, an embodiment of the present disclosure provides a data transmission apparatus 400, which is applied to a network device and includes:
a fifth receiving module 401, configured to: receive multiple QoS flows of a target service sent by at least one terminal; where a QoS guarantee level of a target QoS flow of the target service is reduced or a transmission of the target QoS flow is stopped, and the target QoS flow is one or more of the multiple QoS flows of the target service.

Optionally, the apparatus 400 further includes:
a sixth receiving module, configured to: receive an untransmitted QoS flow of the target service sent by the at least one terminal.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, the apparatus 300 further includes:
a first sending module, configured to send uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are different; configuration information about whether a transmission of QoS flow is allowed to be stopped.

Optionally, the apparatus 400 further includes:
a second obtaining module, configured to obtain viewpoint information of a target receiving end user;
a second determining module, configured to determine the target QoS flow, according to the viewpoint information of the target receiving end user and the uplink transmission configuration information; and
a second sending module, configured to send first indication information to the at least one terminal; where the first indication information is configured to indicate reducing the QoS guarantee level of the target QoS flow, or stopping the transmission of the target QoS flow.

Optionally, the apparatus 400 further includes:
a third sending module, configured to send second indication information to the at least one terminal; where the second indication information is configured to indicate restoring the transmission of the target QoS flow, or increasing the QoS guarantee level of a target QoS flow group.

Optionally, the apparatus 400 further includes:
a fourth sending module, configured to send uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, a third obtaining module, configured to obtain a group identifier of each QoS flow according to at least one of the following methods:
obtaining the group identifier of each QoS flow carried by a data frame;
obtaining the group identifier of each QoS flow carried by an Internet Protocol (IP) packet carrying a data frame;
obtaining the group identifier of each QoS flow carried by a packet of the QoS flow; and
obtaining the group identifier of each QoS flow carried by a layer-2 packet at a radio access network (RAN) side.

It should be noted here that the above-mentioned device provided in the embodiment of the present disclosure can implement all the method steps implemented by the method embodiment on the above-mentioned network device side, and can achieve the same technical effect. The parts and beneficial effects that are the same as the method embodiment in this embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the prior art or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

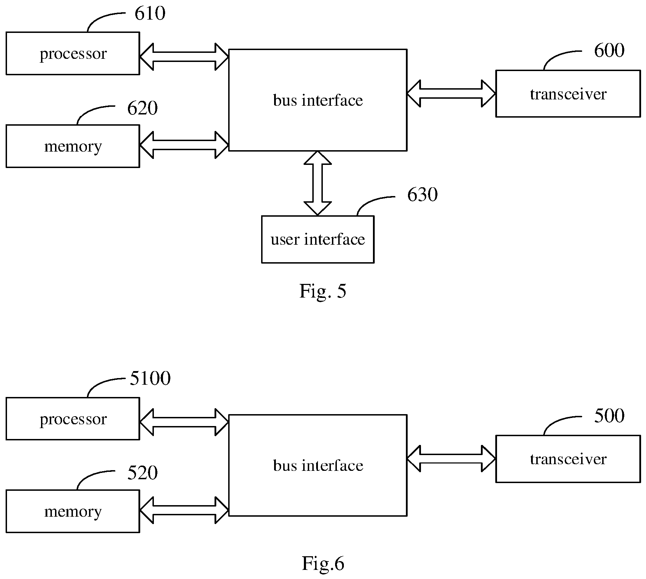

Referring to Fig.5, an embodiment of the present disclosure provides a terminal, including: a processor 510; and a memory 520 connected to the processor 510 via a bus interface, the memory 520 is used to store programs and data used by the processor 510 when performing operations, and the processor 510 calls and executes the programs and data stored in the memory 520. The transceiver 500 is connected to the bus interface, and is used to receive and send data under the control of the processor 510; the processor 510 is used to read the program in the memory 520 and perform the following processes:
when sending multiple Quality of Service (QoS) flows of a target service to at least one network device, reducing a QoS guarantee level of a target QoS flow, or stopping a transmission of the target QoS flow; where the target QoS flow is one or more of the multiple QoS flows of the target service.

Optionally, the processor is further configured to read the program in the memory to perform:
storing an untransmitted QoS flow of the target service, and sending the untransmitted QoS flow to the network device actively or according to a scheduling of a network side.

Optionally, processor 510 is further configured to read the program in the memory 520 to perform one of:
mapping the untransmitted QoS flow to a new data radio bearer (DRB) to transmit the untransmitted QoS flow via air interface;
transmitting the untransmitted QoS flow through an originally configured DRB via air interface.

Optionally, the processor 510 is further configured to read the program in the memory 520 to perform:
marking a priority of the untransmitted QoS flow as lower than a priority of a subsequently arriving QoS flow.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, the processor 510 is further configured to read the program in the memory 520 to perform:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are the same or different; configuration information about whether a transmission of QoS flow is allowed to be stopped.

Optionally, the processor 510 is further configured to read the program in the memory 520 to perform:
receiving first indication information sent by the at least one network device; where the first indication information is configured to indicate reducing the QoS guarantee level of the target QoS flow, or stopping the transmission of the target QoS flow.

Optionally, the processor 510 is further configured to read the program in the memory 520 to perform:
receiving second indication information sent by the at least one network device; where the second indication information is configured to indicate restoring the transmission of the target QoS flow, or restoring the QoS guarantee level of a target QoS flow group.

Optionally, the processor 510 is further configured to read the program in the memory 520 to perform:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information includes at least one of:
configuration information about whether to allow a terminal to lower the QoS level of QoS flow on its own;
configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, the processor 510 is further configured to read the program in the memory 520 to perform:
obtaining viewpoint information of a target receiving end user;
determining the target QoS flow, according to the viewpoint information of the target receiving end user and the uplink transmission configuration information.

Optionally, the processor 510 is further configured to read the program in the memory 520 to perform: carrying a group identifier of each QoS flow according to at least one of the following methods:
adding the group identifier of each QoS flow to a data frame;
carrying the group identifier of each QoS flow on an Internet Protocol (IP) packet carrying a data frame;
carrying the group identifier of each QoS flow on a packet of the QoS flow; and
carrying the group identifier of each QoS flow on a layer-2 packet at a radio access network (RAN) side.

In Fig. 5, the bus architecture may include any number of interconnected buses and bridges, specifically one or more processors represented by processor 510 and various circuits of memory represented by memory 520 are linked together. The bus architecture can also link various other circuits such as peripherals, voltage regulators, and power management circuits together, which are all well known in the art, so they are not further described herein. The bus interface provides an interface. The transceiver 500 can be a plurality of components, namely, a transmitter and a receiver, providing a unit for communicating with various other devices on a transmission medium, and these transmission media include transmission media such as wireless channels, wired channels, and optical cables. For different user devices, the user interface 530 can also be an interface that can be connected to external and internal devices, and the connected devices include but are not limited to keypads, displays, speakers, microphones, joysticks, etc.

The processor 510 is responsible for managing the bus architecture and general processing, and the memory 520 can store data used by the processor 510 when performing operations.

Optionally, the processor 510 may be a central processing unit (CPU), an application specific integrated circuit (ASIC), a field programmable gate array (FPGA) or a complex programmable logic device (CPLD), and the processor may also adopt a multi-core architecture.

The processor is configured to execute any of the methods provided by the embodiments of the present disclosure according to the obtained executable instructions by calling the computer program stored in the memory. The processor and memory can also be physically separated.

Referring to Fig. 6, an embodiment of the present disclosure provides a network device, including: a processor 610; and a memory 620 connected to the processor 610 through a bus interface, the memory 620 is used to store programs and data used by the processor 610 when performing operations, and the processor 610 calls and executes the programs and data stored in the memory 620.

The transceiver 600 is connected to the bus interface and is used to receive and send data under the control of the processor 610; the processor 610 is used to read the program in the memory 620 and execute the following process:
receiving multiple QoS flows of a target service sent by at least one terminal; where a QoS guarantee level of a target QoS flow of the target service is reduced or a transmission of the target QoS flow is stopped, and the target QoS flow is one or more of the multiple QoS flows of the target service.

Optionally, the processor 610 is configured to read the program in the memory 620 to perform:
receiving an untransmitted QoS flow of the target service sent by the at least one terminal.

Optionally, the target QoS flow includes at least one QoS flow and/or at least one QoS flow group, and each of the QoS flow group includes at least one of the multiple QoS flows of the target service.

Optionally, the QoS flows are grouped according to at least one of the following methods:
grouping the QoS flows presenting a same orientation into a group;
grouping the QoS flows in terms of different presentation resolutions; and
grouping the QoS flows affecting each other into a group.

Optionally, the processor 610 is configured to read the program in the memory 620 to perform:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of: multiple sets of QoS transmission parameters corresponding to the QoS flows, where priorities of different sets of QoS transmission parameters are different; configuration information about whether a transmission of QoS flow is allowed to be stopped.

Optionally, the processor 610 is configured to read the program in the memory 620 to perform:
obtaining viewpoint information of a target receiving end user;
determining the target QoS flow, according to the viewpoint information of the target receiving end user and the uplink transmission configuration information; and
sending first indication information to the at least one terminal; where the first indication information is configured to indicate reducing the QoS guarantee level of the target QoS flow, or stopping the transmission of the target QoS flow.

Optionally, the processor 610 is configured to read the program in the memory 620 to perform:
sending second indication information to the at least one terminal; where the second indication information is configured to indicate restoring the transmission of the target QoS flow, or increasing the QoS guarantee level of a target QoS flow group.

Optionally, the processor 610 is configured to read the program in the memory 620 to perform:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information includes at least one of:
   configuration information about whether to allow a terminal to lower the QoS level of QoS flow on its own;
   configuration information about whether to allow the terminal to stop the transmission of QoS flow on its own.

Optionally, the uplink transmission configuration information further includes:
multiple sets of QoS transmission parameters corresponding to the QoS flows, where priorities of different sets of QoS transmission parameters are the same or different.

Optionally, the processor 610 is configured to read the program in the memory 620 to perform: obtaining a group identifier of each QoS flow according to at least one of the following methods:
obtaining the group identifier of each QoS flow carried by a data frame;
obtaining the group identifier of each QoS flow carried by an Internet Protocol (IP) packet carrying a data frame;
obtaining the group identifier of each QoS flow carried by a packet of the QoS flow; and
obtaining the group identifier of each QoS flow carried by a layer-2 packet at a radio access network (RAN) side.

In Fig. 6, the bus architecture can include any number of interconnected buses and bridges, specifically one or more processors represented by processor 610 and various circuits of memory represented by memory 620 are linked together. The bus architecture can also link various other circuits such as peripherals, voltage regulators, and power management circuits together, which are all well known in the art, so they are not further described herein. The bus interface provides an interface. The transceiver 600 can be a plurality of components, that is, including a transmitter and a receiver, providing a unit for communicating with various other devices on a transmission medium, and these transmission media include transmission media such as wireless channels, wired channels, and optical cables. The processor 610 is responsible for managing the bus architecture and general processing, and the memory 620 can store data used by the processor 610 when performing operations.

The processor 610 may be a central processing unit (CPU), an application specific integrated circuit (ASIC), a field programmable gate array (FPGA) or a complex programmable logic device (CPLD). The processor may also adopt a multi-core architecture.

The present disclosure also provides a processor-readable storage medium, where the processor-readable storage medium stores a computer program, and the computer program is used to enable the processor to execute the above-mentioned data transmission method on the terminal side or the network device side.

The processor-readable storage device that can be accessed by the processor, including but not limited to magnetic storage (e.g., floppy disk, hard disk, magnetic tape, magneto-optical disk (MO), etc.), optical storage (e.g., compact disc (CD), digital video disc (DVD), Blu-ray Disc (BD), high-definition versatile disc (HVD), etc.), and semiconductor storage (e.g., read-only memory (ROM), electrically programmable read-only memory (EPROM), electrically erasable programmable read-only memory (EEPROM), non-volatile memory such as NAND FLASH, solid state drive (SSD), etc.).

It should be understood by those skilled in the art that the embodiments of the present disclosure may be provided as methods, systems, or computer program products. Therefore, the present disclosure may take the form of a complete hardware embodiment, a complete software embodiment, or an embodiment combining software and hardware. Moreover, the present disclosure may take the form of a computer program product implemented on one or more computer-usable storage media (including but not limited to disk storage and optical storage, etc.) containing computer-usable program codes.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated, and these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device for implementation. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more digital signal processors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms "first", "second", etc. in the description and claims of the present disclosure are used to distinguish similar objects and are not necessarily used to describe a specific order or sequence. It is to be understood that the data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, e.g., a process, method, system, product, or apparatus that encompasses a series of steps or units and need not be limited to those explicitly listed. Those steps or elements may instead include other steps or elements not expressly listed or inherent to the process, method, product or apparatus. In addition, the use of "and/or" in the description and claims indicates at least one of the connected objects, such as A and/or B and/or C, indicating the inclusion of A alone, B alone, C alone, and both A and B. There are 7 situations in which both B and C exist, both A and C exist, and A, B, and C all exist. Similarly, the use of "at least one of A and B" in this specification and the claims should be understood to mean "A alone, B alone, or both A and B".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A data transmission method, applied to a terminal and comprising:
when sending multiple Quality of Service (QoS) flows of a target service to at least one network device, reducing a QoS guarantee level of a target QoS flow, or stopping a transmission of the target QoS flow; wherein the target QoS flow is one or more of the multiple QoS flows of the target service.

2. The data transmission method according to claim 1, further comprising:
storing an untransmitted QoS flow of the target service, and sending the untransmitted QoS flow to the network device actively or according to a scheduling of a network side.

3. The data transmission method according to claim 2, wherein the sending the untransmitted QoS flow to the network device actively or according to the scheduling of the network side comprises one of:
mapping the untransmitted QoS flow to a new data radio bearer (DRB) to transmit the untransmitted QoS flow via air interface;
transmitting the untransmitted QoS flow through an originally configured DRB via air interface.

4. The data transmission method according to claim 3, wherein the sending the untransmitted QoS flow to the network device actively or according to the scheduling of the network side further comprises:
marking a priority of the untransmitted QoS flow as lower than a priority of a subsequently arriving QoS flow.

5. The data transmission method according to claim 1, wherein the target QoS flow comprises at least one QoS flow and/or at least one QoS flow group, and each of the QoS flow group comprises at least one of the multiple QoS flows of the target service.

6. The data transmission method according to claim 5, wherein the QoS flows are grouped according to at least one of the following methods:
grouping the QoS flows presenting a same orientation into a group;
grouping the QoS flows in terms of different presentation resolutions; and
grouping the QoS flows affecting each other into a group.

7. The data transmission method according to claim 1, wherein prior to the reducing the QoS guarantee level of the target QoS flow or stopping the transmission of the target QoS flow, the method further comprises:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information comprises at least one of: multiple sets of QoS transmission parameters corresponding to the QoS flows, wherein priorities of different sets of QoS transmission parameters are the same or different; configuration information about whether a transmission of QoS flow is allowed to be stopped.

8. The data transmission method according to claim 1 or 7, wherein the reducing the QoS guarantee level of the target QoS flow or stopping the transmission of the target QoS flow comprises:
receiving first indication information sent by the at least one network device; wherein the first indication information is configured to indicate reducing the QoS guarantee level of the target QoS flow, or stopping the transmission of the target QoS flow.

9. The data transmission method according to claim 8, wherein subsequent to the receiving the first indication information sent by the at least one network device, the method further comprises:
receiving second indication information sent by the at least one network device; wherein the second indication information is configured to indicate restoring the transmission of the target QoS flow, or restoring the QoS guarantee level of a target QoS flow group.

10. The data transmission method according to claim 1, wherein prior to the reducing the QoS guarantee level of the target QoS flow or stopping the transmission of the target QoS flow, the method further comprises:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information comprises at least one of:
configuration information about whether to allow a terminal to lower the QoS level of QoS flow on its own;
configuration information about whether to allow the terminal to stop the transmission of QoS flow on its own.

11. The data transmission method according to claim 10, wherein the uplink transmission configuration information further comprises:
multiple sets of QoS transmission parameters corresponding to the QoS flows, wherein priorities of different sets of QoS transmission parameters are the same or different.

12. The data transmission method according to claim 10, wherein prior to the reducing the QoS guarantee level of the target QoS flow or stopping the transmission of the target QoS flow, the method further comprises:
obtaining viewpoint information of a target receiving end user;
determining the target QoS flow, according to the viewpoint information of the target receiving end user and the uplink transmission configuration information.

13. The data transmission method according to claim 1, wherein when sending the multiple QoS flows of the target service to the at least one network device, the method further comprises: carrying a group identifier of each QoS flow according to at least one of the following methods:
adding the group identifier of each QoS flow to a data frame;
carrying the group identifier of each QoS flow on an Internet Protocol (IP) packet carrying a data frame;
carrying the group identifier of each QoS flow on a packet of the QoS flow; and
carrying the group identifier of each QoS flow on a layer-2 packet at a radio access network (RAN) side.

14. A data transmission method, applied to a network device and comprising:
receiving multiple QoS flows of a target service sent by at least one terminal; wherein a QoS guarantee level of a target QoS flow of the target service is reduced or a transmission of the target QoS flow is stopped, and the target QoS flow is one or more of the multiple QoS flows of the target service.

15. The data transmission method according to claim 14, wherein subsequent to the receiving the multiple QoS flows of the target service sent by at least one terminal, the method further comprises:
receiving an untransmitted QoS flow of the target service sent by the at least one terminal.

16. The data transmission method according to claim 14, wherein the target QoS flow comprises at least one QoS flow and/or at least one QoS flow group, and each of the QoS flow group comprises at least one of the multiple QoS flows of the target service.

17. The data transmission method according to claim 16, wherein the QoS flows are grouped according to at least one of the following methods:
grouping the QoS flows presenting a same orientation into a group;
grouping the QoS flows in terms of different presentation resolutions; and
grouping the QoS flows affecting each other into a group.

18. The data transmission method according to claim 14, wherein prior to the receiving the multiple QoS flows of the target service sent by at least one terminal, the method further comprises:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information comprises at least one of: multiple sets of QoS transmission parameters corresponding to the QoS flows, wherein priorities of different sets of QoS transmission parameters are different; configuration information about whether a transmission of QoS flow is allowed to be stopped.

19. The data transmission method according to claim 18, wherein subsequent to the sending uplink transmission configuration information of the multiple QoS flows belonging to the target service to the at least one terminal, the method further comprises:
obtaining viewpoint information of a target receiving end user;
determining the target QoS flow, according to the viewpoint information of the target receiving end user and the uplink transmission configuration information; and
sending first indication information to the at least one terminal; wherein the first indication information is configured to indicate reducing the QoS guarantee level of the target QoS flow, or stopping the transmission of the target QoS flow.

20. The data transmission method according to claim 19, wherein subsequent to the sending the first indication information to the at least one terminal, the method further comprises:
sending second indication information to the at least one terminal; wherein the second indication information is configured to indicate restoring the transmission of the target QoS flow, or increasing the QoS guarantee level of a target QoS flow group.

21. The data transmission method according to claim 14, wherein prior to the receiving the multiple QoS flows of the target service sent by at least one terminal, the method further comprises:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information comprises at least one of:
configuration information about whether to allow a terminal to lower the QoS level of QoS flow on its own;
configuration information about whether to allow the terminal to stop the transmission of QoS flow on its own.

22. The data transmission method according to claim 21, wherein the uplink transmission configuration information further comprises:
multiple sets of QoS transmission parameters corresponding to the QoS flows, wherein priorities of different sets of QoS transmission parameters are the same or different.

23. The data transmission method according to claim 14, wherein when receiving the multiple QoS flows of the target service sent by at least one terminal, the method further comprises: obtaining a group identifier of each QoS flow according to at least one of the following methods:
obtaining the group identifier of each QoS flow carried by a data frame;
obtaining the group identifier of each QoS flow carried by an Internet Protocol (IP) packet carrying a data frame;
obtaining the group identifier of each QoS flow carried by a packet of the QoS flow; and
obtaining the group identifier of each QoS flow carried by a layer-2 packet at a radio access network (RAN) side.

24. A terminal comprising: a transceiver, a memory, a processor, and a computer program stored in the memory and executable on the processor; wherein:
the processor is configured to read the program in the memory to perform:
when sending multiple Quality of Service (QoS) flows of a target service to at least one network device, reducing a QoS guarantee level of a target QoS flow, or stopping a transmission of the target QoS flow; wherein the target QoS flow is one or more of the multiple QoS flows of the target service.

25. The terminal according to claim 24, wherein the processor is further configured to read the program in the memory to perform:
storing an untransmitted QoS flow of the target service, and sending the untransmitted QoS flow to the network device actively or according to a scheduling of a network side.

26. The terminal according to claim 25, wherein the processor is further configured to read the program in the memory to perform one of:
mapping the untransmitted QoS flow to a new data radio bearer (DRB) to transmit the untransmitted QoS flow via air interface;
transmitting the untransmitted QoS flow through an originally configured DRB via air interface.

27. The terminal according to claim 26, wherein the processor is further configured to read the program in the memory to perform:
marking a priority of the untransmitted QoS flow as lower than a priority of a subsequently arriving QoS flow.

28. The terminal according to claim 24, wherein the target QoS flow comprises at least one QoS flow and/or at least one QoS flow group, and each of the QoS flow group comprises at least one of the multiple QoS flows of the target service.

29. The terminal according to claim 28, wherein the QoS flows are grouped according to at least one of the following methods:
grouping the QoS flows presenting a same orientation into a group;
grouping the QoS flows in terms of different presentation resolutions; and
grouping the QoS flows affecting each other into a group.

30. The terminal according to claim 24, wherein the processor is further configured to read the program in the memory to perform:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information comprises at least one of: multiple sets of QoS transmission parameters corresponding to the QoS flows, wherein priorities of different sets of QoS transmission parameters are the same or different; configuration information about whether a transmission of QoS flow is allowed to be stopped.

31. The terminal according to claim 24 or 30, wherein the processor is further configured to read the program in the memory to perform:
receiving first indication information sent by the at least one network device; wherein the first indication information is configured to indicate reducing the QoS guarantee level of the target QoS flow, or stopping the transmission of the target QoS flow.

32. The terminal according to claim 31, wherein the processor is further configured to read the program in the memory to perform:
receiving second indication information sent by the at least one network device; wherein the second indication information is configured to indicate restoring the transmission of the target QoS flow, or restoring the QoS guarantee level of a target QoS flow group.

33. The terminal according to claim 24, wherein the processor is further configured to read the program in the memory to perform:
receiving uplink transmission configuration information of the multiple QoS flows belonging to the target service sent by the at least one network device; the uplink transmission configuration information is configured for each QoS flow, or is configured for a DRB and applied to all QoS flows mapped to the DRB;
the uplink transmission configuration information comprises at least one of:
configuration information about whether to allow a terminal to lower the QoS level of QoS flow on its own;
configuration information about whether to allow the terminal to stop the transmission of QoS flow on its own.

34. The terminal according to claim 33, wherein the uplink transmission configuration information further comprises:
multiple sets of QoS transmission parameters corresponding to the QoS flows, wherein priorities of different sets of QoS transmission parameters are the same or different.

35. The terminal according to claim 33, wherein the processor is further configured to read the program in the memory to perform:
obtaining viewpoint information of a target receiving end user;
determining the target QoS flow, according to the viewpoint information of the target receiving end user and the uplink transmission configuration information.

36. The terminal according to claim 24, wherein the processor is further configured to read the program in the memory to perform: carrying a group identifier of each QoS flow according to at least one of the following methods:
adding the group identifier of each QoS flow to a data frame;
carrying the group identifier of each QoS flow on an Internet Protocol (IP) packet carrying a data frame;
carrying the group identifier of each QoS flow on a packet of the QoS flow; and
carrying the group identifier of each QoS flow on a layer-2 packet at a radio access network (RAN) side.

37. A network device, comprising: a transceiver, a memory, a processor, and a computer program stored in the memory and executable on the processor; wherein:
the processor is configured to read the program in the memory to perform:
receiving multiple QoS flows of a target service sent by at least one terminal; wherein a QoS guarantee level of a target QoS flow of the target service is reduced or a transmission of the target QoS flow is stopped, and the target QoS flow is one or more of the multiple QoS flows of the target service.

38. The network device according to claim 37, wherein the processor is configured to read the program in the memory to perform:
receiving an untransmitted QoS flow of the target service sent by the at least one terminal.

39. The network device according to claim 37, wherein the target QoS flow comprises at least one QoS flow and/or at least one QoS flow group, and each of the QoS flow group comprises at least one of the multiple QoS flows of the target service.

40. The network device according to claim 39, wherein the QoS flows are grouped according to at least one of the following methods:
grouping the QoS flows presenting a same orientation into a group;
grouping the QoS flows in terms of different presentation resolutions; and
grouping the QoS flows affecting each other into a group.

41. The network device according to claim 37, wherein the processor is configured to read the program in the memory to perform:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information comprises at least one of: multiple sets of QoS transmission parameters corresponding to the QoS flows, wherein priorities of different sets of QoS transmission parameters are different; configuration information about whether a transmission of QoS flow is allowed to be stopped.

42. The network device according to claim 41, wherein the processor is configured to read the program in the memory to perform:
obtaining viewpoint information of a target receiving end user;
determining the target QoS flow, according to the viewpoint information of the target receiving end user and the uplink transmission configuration information; and
sending first indication information to the at least one terminal; wherein the first indication information is configured to indicate reducing the QoS guarantee level of the target QoS flow, or stopping the transmission of the target QoS flow.

43. The network device according to claim 42, wherein the processor is configured to read the program in the memory to perform:
sending second indication information to the at least one terminal; wherein the second indication information is configured to indicate restoring the transmission of the target QoS flow, or increasing the QoS guarantee level of a target QoS flow group.

44. The network device according to claim 37, wherein the processor is configured to read the program in the memory to perform:
sending uplink transmission configuration information of the multiple QoS flows belonging to the target service to the at least one terminal; the uplink transmission configuration information is configured for each QoS flow, or is configured for a DRB and applied to all QoS flows mapped to the DRB;
the uplink transmission configuration information comprises at least one of:
configuration information about whether to allow a terminal to lower the QoS level of QoS flow on its own;
configuration information about whether to allow the terminal to stop the transmission of QoS flow on its own.

45. The network device according to claim 44, wherein the uplink transmission configuration information further comprises:
multiple sets of QoS transmission parameters corresponding to the QoS flows, wherein priorities of different sets of QoS transmission parameters are the same or different.

46. The network device according to claim 37, wherein the processor is configured to read the program in the memory to perform: obtaining a group identifier of each QoS flow according to at least one of the following methods:
obtaining the group identifier of each QoS flow carried by a data frame;
obtaining the group identifier of each QoS flow carried by an Internet Protocol (IP) packet carrying a data frame;
obtaining the group identifier of each QoS flow carried by a packet of the QoS flow; and
obtaining the group identifier of each QoS flow carried by a layer-2 packet at a radio access network (RAN) side.

47. A data transmission apparatus, applied to a terminal and comprising:
a first processing module, configured to: when sending multiple Quality of Service (QoS) flows of a target service to at least one network device, reduce a QoS guarantee level of a target QoS flow, or stop a transmission of the target QoS flow; wherein the target QoS flow is one or more of the multiple QoS flows of the target service.

48. A data transmission apparatus, applied to a network device and comprising:
a fifth receiving module, configured to: receive multiple QoS flows of a target service sent by at least one terminal; wherein a QoS guarantee level of a target QoS flow of the target service is reduced or a transmission of the target QoS flow is stopped, and the target QoS flow is one or more of the multiple QoS flows of the target service.

49. A processor-readable storage medium, wherein a computer program is stored in the processor-readable storage medium, the computer program is configured to cause the processor to perform the method according to any one of claims 1 to 23.
